Europäisches Patentamt

European Patent Office

Office européen des brevets

(11) Veröffentlichungsnummer: **0 312 944**
**A2**

(12) # EUROPÄISCHE PATENTANMELDUNG

(21) Anmeldenummer: 88117192.0

(22) Anmeldetag: 15.10.88

(51) Int. Cl.⁴: **B23B 3/30**

(30) Priorität: 23.10.87 DE 3735926
10.10.88 DE 3834382

(43) Veröffentlichungstag der Anmeldung:
26.04.89 Patentblatt 89/17

(84) Benannte Vertragsstaaten:
**AT BE CH DE ES FR GB GR IT LI LU NL SE**

(71) Anmelder: **Nagel, Peter**
**Schulstrasse 14**
**D-5780 Bestwig-Ramsbeck(DE)**

Anmelder: **Schmid, Franz**
**Erlenweg 27**
**D-7411 St. Johann(DE)**

(72) Erfinder: **Nagel, Peter**
**Schulstrasse 14**
**D-5780 Bestwig-Ramsbeck(DE)**
Erfinder: **Schmid, Franz**
**Erlenweg 27**
**D-7411 St. Johann(DE)**

(74) Vertreter: **Pürckhauer, Rolf**
**Friedrich-Ebert-Strasse 27 Postfach 10 09 28**
**D-5900 Siegen 1(DE)**

(54) **Mehrspindeldrehautomat.**

(57) Die bekannten Mehrspindeldrehautomaten sind aufgrund der aufwendigen Konstruktion teuer, und die Produktionsleistung und die Produktionsmöglichkeiten sind wegen der begrenzten Anzahl der zum Einsatz kommenden Werkstückspindeln beschränkt. Der neue Drehautomat soll höhere Produktionsleistungen und universellere Fertigungsmöglichkeiten bei einer einfacheren Konstruktion bieten.

Der Grundaufbau eines Drehautomaten mit acht Werkzeugspindeln (10) zur Fertigung von Werkstükken in acht aufeinanderfolgenden Bearbeitungsstationen besteht darin, daß zusätzlich zur Anzahl der Grundwerkzeugstationen (1 bis 8) jede Grundwerkzeugstation bis auf die erste nochmals als zusätzliche Werkzeugstation (2 bis 8) vorgesehen sind, die in gleicher Reihenfolge der Bearbeitung vor den Grundwerkzeugstationen (1 bis 8) angeordnet sind, so daß die Gesamtzahl der Bearbeitungsstationen N = 2n - 1 beträgt, wobei eine Be- und Entladestation an der Werkzeugstation (1) vorgesehen ist. Die Bearbeitung der Werkstücke erfolgt derart, daß jedes Werkstück nach jeder Bearbeitung in einer Werkzeugstation taktweise linear, relativ zur nächsten Station verschoben wird und nach sieben Transportschritten und einem anschließenden Rückhub oder einem Rückhub zwischen zwei Transportschritten in seine Ausgangsbearbeitungsstation gelangt.

Der Mehrspindeldrehautomat ist zur Massenfertigung von Werkstücken unterschiedlichster Art einsetzbar.

Fig. 2

## Mehrspindeldrehautomat

Die Erfindung betrifft Mehrspindelautomaten zur Fertigung von Werkstücken in aufeinanderfolgenden Bearbeitungsstationen mit Werkstückspindeln und Werkzeugstationen.

Aus der US-PS 1 527 791 ist ein zweispindeliger Futterdrehautomat mit einem durch einen pneumatischen oder elektrischen Antrieb in Richtung der Spindelachsen vorwärts und rückwärts verfahrbaren Support und einem auf diesem angeordneten Werkzeugschlitten bekannt, der durch einen Pneumatikantrieb quer zu den Spindelachsen hin- und herbewegbar ist und der je zwei einer Spindel zugeordnete Werkzeughalter mit verschiedenen Werkzeugen zum Bearbeiten der Werkstücke trägt, die fortlaufend auf die Haltedorne aufgeschoben werden, die in die Spannfutter der beiden Spindeln eingespannt sind und durch die Spindeln rotierend angetrieben werden. Nach Beendigung des ersten Bearbeitungsvorganges an den beiden auf den Haltedornen der Spindeln sitzenden Werkstücke durch die Werkzeuge der ersten Werkzeughalter werden die Werkzeuge der zweiten Werkzeughalter durch einen Quervorschub des Werkzeugschlittens an die beiden gleichzeitig zu bearbeitenden Werkstücke angesetzt. Nach Abschluß des zweiten Arbeitsganges wird der Support mit dem Werkzeugschlitten in Richtung der Spindelachsen von den Spindeln entfernt, es werden die fertigen Werkstücke den beiden Bearbeitungsstationen entnommen und zwei neue Werkstücke zugeführt, der Antrieb des Werkzeugschlittens wird durch den Rücklauf des Supports umgesteuert und der Werkzeugschlitten in seine Ausgangsposition zurückgefahren. Danach werden die Werkzeuge der beiden ersten Werkzeughalter des Werkzeugschlittens durch Vorfahren des Supports wieder in die Arbeitsposition gebracht, und ein neuer Arbeitszyklus beginnt.

Die in der DE-AS 1 156 292 beschriebene Konstruktion eines Zweispindelautomaten fußt auf dem Prinzip in Richtung der Spindelachsen taktweise verfahrbarer Werkzeuge und quer zu ihren Achsen taktweise beweglicher Spindeln zum Antrieb der Werkstücke. Bei diesem Zweispindelautomaten für die beidseitige Kantenabrundung von Wälzlagerringen ist der Spindelkasten mit den beiden Werkstückspindeln um den Spindelabstand quer zu den Spindelachsen hin- und herschiebbar. In den äußeren Arbeitsstellungen liegt jeweils eine der Spindeln dem in Querrichtung festen, gemeinsamen Werkzeugträger mit den Bearbeitungswerkzeugen und die andere Spindel einer von zwei fest angeordneten Ladevorrichtungen gegenüber, die durch eine Überleitungsrinne mit Wendeeinrichtung verbunden sind.

Die beiden vorbekannten Drehautomaten mit einer aufwendigen Konstruktion weisen nur zwei Werkstückspindeln auf, so daß ihre Leistung niedrig und ihre Produktionsmöglichkeiten sehr beschränkt sind. Dabei liegt die Produktionsleistung des Automaten nach der DE-AS 1 156 292 mit der Herstellung von einem Werkstück je Arbeitsgang noch unter der Leistung des Automaten nach der US-PS 1 527 791 mit der gleichzeitigen Fertigung von zwei Werkstücken je Arbeitsgang.

Schließlich zeigt die DE-OS 34 28 861 einen nach dem Rundtaktprinzip arbeitenden Mehrspindeldrehautomaten mit einer Spindeltrommel zur Aufnahme der Werkstückspindeln, die in einem feststehenden Maschinenrahmen drehbar gelagert und in eine der Anzahl der Werkstückspindeln entsprechende Anzahl von Schaltstellungen fortschaltbar ist. Die in der Spindeltrommel drehbar angeordneten Werkstückspindeln werden einzeln durch gesonderte Elektromotoren mit einer Drehzahlregelung angetrieben.

Die wesentlichen Nachteile dieses bekannten Drehautomaten sind darin zu sehen, daß die Spindelantriebe und der Antrieb der Spindeltrommel sowie die Drehlagerung der Trommel sehr aufwendig sind. Ferner sind dem nach dem Rundtaktprinzip arbeitenden Drehautomaten hinsichtlich der Anzahl der Werkstückspindeln Grenzen gesetzt, da mit einer steigenden Anzahl der in einer Trommel angeordneten Spindeln der Trommeldurchmesser entsprechend vergrößert werden muß und mit steigendem Trommeldurchmesser die Bearbeitungsgenauigkeit des Drehautomaten beeinträchtigt wird. Schließlich sind die Produktionsleistung und die Produktionsmöglichkeiten des Drehautomaten beschränkt, weil die Werkzeuge nur radial von außen an die Werkstücke angesetzt werden können, die durch die an der Stirnseite der Trommel befindlichen Werkstückspindeln angetrieben werden, und die Standzeiten der Werkzeuge sind verhältnismäßig kurz, da die Werkzeuge ohne Unterbrechung in Betrieb sind und aufgrund der großen Erwärmung einem starken Verschleiß unterliegen.

Der Erfindung liegt die Aufgabe zugrunde, einen Mehrspindeldrehautomaten zu entwickeln, der sich gegenüber den bekannten Drehautomaten durch höhere Produktionsleistungen und universellere Produktionsmöglichkeiten durch eine Erhöhung der Anzahl der Werkstückspindeln und Bearbeitungsstationen und eine einfachere Konstruktion auszeichnet.

Diese Aufgabe wird durch das im Patentanspruch 1 angegebene Konstruktionsprinzip gelöst.

Die Unteransprüche enthalten zweckmäßige Weiterbildungen der Erfindung.

Zusätzlich zu den der Aufgabenstellung entnehmbaren Vorteilen zeichnet sich der erfindungsgemäße Drehautomat gegenüber den bekannten Automaten durch folgende Vorteile aus:

Die Konstruktion des nach dem Lineartaktprinzip arbeitenden Drehautomaten ist durch die Unterbringung der Werkstückspindeln in einem gemeinsamen Spindelkasten weniger aufwendig als diejenige der bekannten Automaten mit Rundtaktprinzip, so daß man mehrere Maschinen sinnvoller und besser konzipieren kann als bisher. Der Automat ist äußerst bedienungsfreundlich. Man kann bei dem neuen Automaten den stufenlosen und geschalteten, z.B. CNC-gesteuerten Antrieb verwirklichen, so daß man z.B. die Werkstückspindeln unabhängig voneinander anhalten und wieder drehen lassen kann. Der Automat hat eine höhere Steifigkeit und eine bessere Lagermöglichkeit von Spindelstockträgern und Werkzeugträgern. Schließlich ist bei dem Automaten ein ungehinderter Spanabfluß gewährleistet.

Die Erfindung mit weiteren Vorteilen ist nachstehend anhand schematischer Zeichnungen verdeutlicht. Es zeigt

Fig. 1 das Grundprinzip des Mehrspindeldrehautomaten,

Fig. 2 die Vorderansicht einer ersten Ausführungsform des Drehautomaten mit sieben Spindeln,

Fig. 3 eine Seitenansicht des Drehautomaten nach Fig. 2,

Fig. 4 die Funktionsweise des Drehautomaten mit sieben Spindeln anhand der Darstellung des taktweisen Vorschubes und des Rücklaufes des Spindelschlittens bei zwei Arbeitszyklen und

Fig. 5 eine Vorderansicht einer zweiten Ausführungsform des Automaten mit einer Schräganordnung von fünf Spindeln und neun Bearbeitungsstationen.

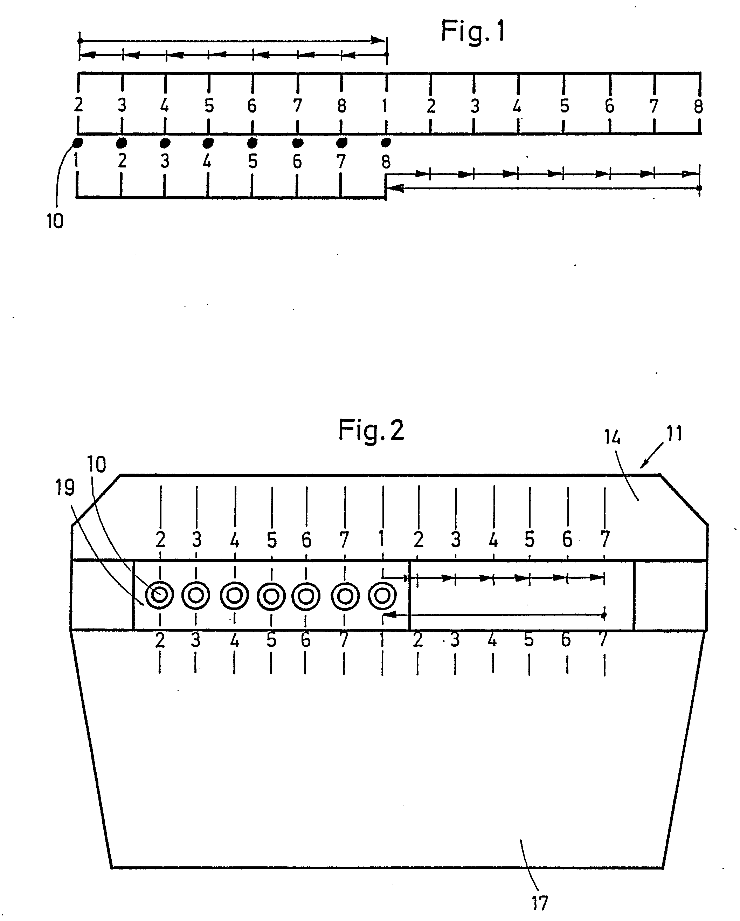

Der in Fig. 1 verdeutlichte Grundaufbau eines Drehautomaten mit acht Werkstückspindeln 10 zur Fertigung von Werkstücken in acht aufeinanderfolgenden Bearbeitungsstationen besteht darin, daß zusätzlich zur Anzahl der Grundwerkzeugstationen 1 bis 8 jede Grundwerkzeugstation bis auf die erste nochmals als zusätzliche Werkzeugstationen 2 bis 8 vorgesehen sind, die in gleicher Reihenfolge der Bearbeitung vor den Grundwerkzeugstationen 1 bis 8 angeordnet sind, so daß die Gesamtzahl der Bearbeitungsstationen N = 2n - 1 beträgt, wobei eine Be- und Entladestation an der Werkzeugstation 1 vorgesehen ist. Die Bearbeitung der Werkstücke in dem Drehautomaten erfolgt derart, daß jedes Werkstück nach jeder Bearbeitung in einer Werkzeugstation taktweise linear, relativ zur nächsten Station verschoben wird und nach sieben Transportschritten und einem anschließenden Rückhub oder einem Rückhub zwischen zwei Transportschlitten in seine Ausgangsbearbeitungsstation gelangt.

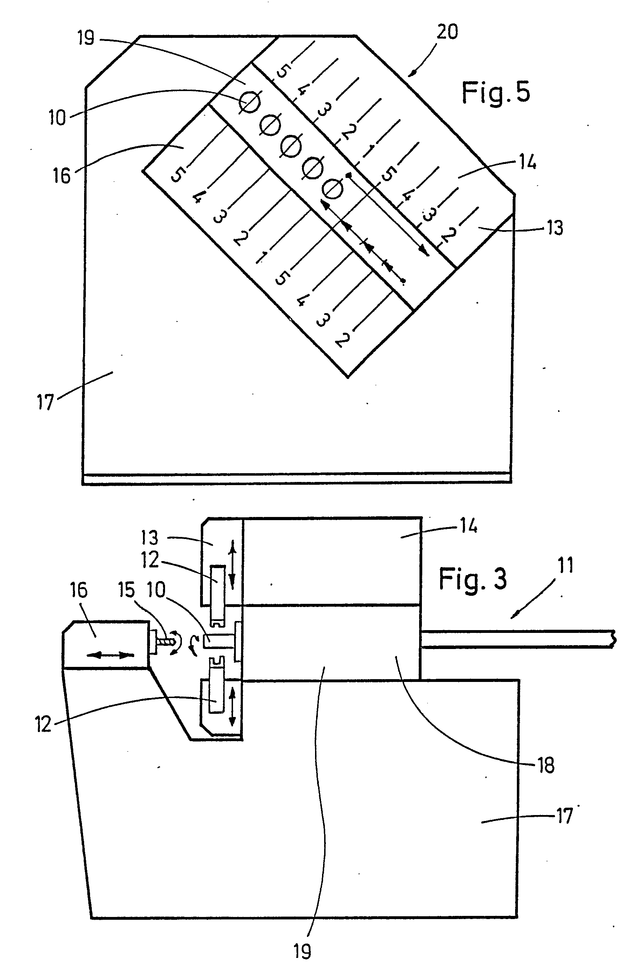

Der Drehautomat 11 nach den Fign. 2 und 3 weist sieben Werkstückspindeln 10 mit nicht dargestellten Werkstückaufnahmen sowie sieben Grundwerkzeugstationen 1 bis 7 mit vertikal und horizontal angeordneten Werkzeugen auf. Ferner hat der Drehautomat 11 jede Grundwerkzeugstation bis auf die erste als zusätzliche Werkzeugstationen 2 bis 7, die in gleicher Reihenfolge der Bearbeitung vor den Grundwerkzeugstationen 1 bis 7 angeordnet sind. Der Drehautomat hat somit insgesamt dreizehn Bearbeitungsstationen.

Die vertikalen Werkzeugstationen 2 bis 7 und 1 bis 7 mit den Werkzeugen 12 sind auf einem feststehenden Schlitten 13 in einem Gesamtträger 14 angeordnet. Die horizontalen Werkzeugstationen 2 - 7 und 1 - 7 mit den Werkzeugen 15 befinden sich auf einem feststehenden Schlitten 16. Vertikale und horizontale Bearbeitungsstationen 2 - 7 und 1 - 7 werden von einem Grundgestell 17 aufgenommen. Die Werkstückspindeln 10 sind in einem gemeinsamen Spindelstock 18 auf einem Schlitten 19 angeordnet, der mittels eines nicht dargestellten Hydraulikantriebs einen taktweisen Vorschub und einen durchgehenden Rückhub ausführt. Jede Spindel 10 wird durch einen nicht dargestellten Elektromotor mit stufenloser Drehzahlregelung angetrieben.

Die Be- und Entladevorrichtung für die Werkstücke befindet sich an der Werkzeugstation 1.

Fig. 3 verdeutlicht, daß die vertikalen Werkzeuge 12 einzeln oder paarweise gegenüberliegend über den ganzen Umfangsbereich eines Werkstücks angesetzt werden können und daß die Frontseite eines Werkstücks durch die horizontalen Werkzeuge 15 erfaßt wird.

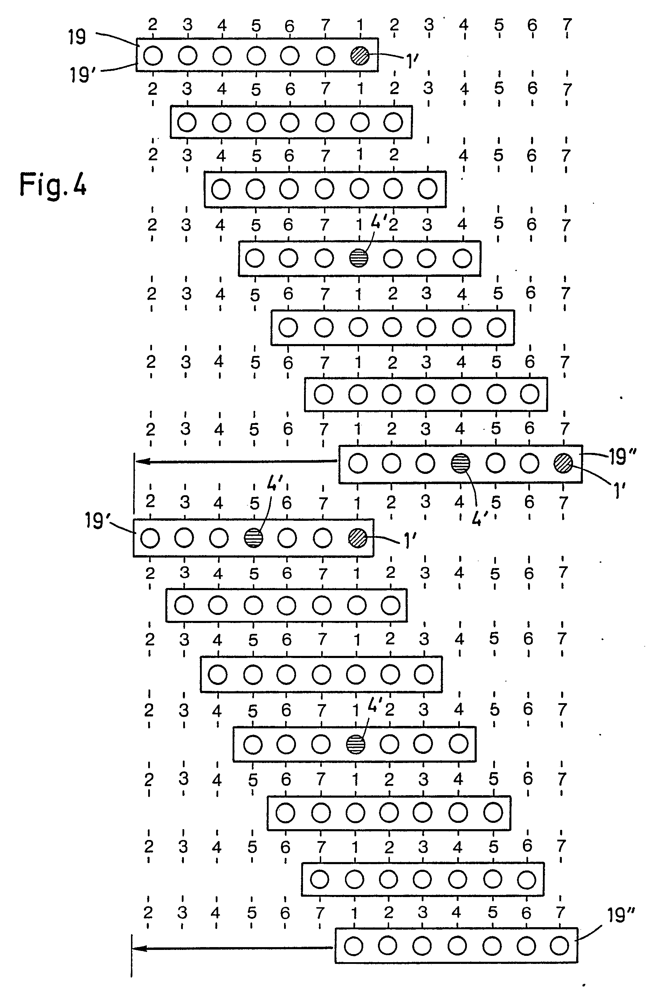

Die Betriebsweise des Drehautomaten 11 nach den Fign. 2 und 3 geht aus Fig. 4 hervor.

Ein Arbeitszyklus des Drehautomaten 11 umfaßt einen taktweisen Vorschub des Schlittens 19 mit den sieben Werkstückspindeln 10 über sechs Taktschritte, wobei der Schlitten 19 aus der Ausgangsstellung $19'$ in die Endstellung $19''$ gelangt, sowie einen durchgehenden Rückhub des Schlittens 19 aus der Endstellung $19''$ zurück in die Ausgangsstellung $19'$.

Wird z.B. in der Ausgangsstellung $19'$ des Schlittens 19 nach vorheriger Entnahme eines fertigen Werkstücks in der Grundwerkzeugstation 1 durch die Entladevorrichtung ein neues Werkstück $1'$ in die Aufnahmevorrichtung, z.B. ein Spannfutter, der ersten Arbeitsspindel durch die Ladevorrichtung eingeführt, so gelangt dieses Werkstück $1'$ bei sechs Taktschritten des Schlittens 19 bei dem Arbeitszyklus des Drehautomaten durch alle Grundwerkzeugstationen 1 bis 7 in die Station 7 und wird von dort durch den Rückhub des Schlittens 19 aus der Position 19″ in die Position 19 in die Ausgangsbearbeitungsstation 1 zurücktransportiert und in dieser durch die Entladevorrichtung entnommen.

Das beispielsweise nach dem dritten Vorschubtaktschritt des Schlittens 19 an der Werkzeugstation 1 in die Aufnahmevorrichtung der vierten Werkstückspindel gelangende Werkstück 4′ durchläuft bei den drei restlichen Taktschritten des Arbeitszyklusses die Grundwerkzeugstationen 2 bis 4, wird durch den Rücklauf des Schlittens 19 aus der Position 19″ in die Position 19′ in die zusätzliche Werkzeugstation 5 gefördert und gelangt nach drei Vorschubtaktschritten des Schlittens 19 im anschließenden Arbeitszyklus des Drehautomaten über die Stationen 6 und 7 in die Grundwerkzeugstation 1 und wird dort fertig bearbeitet durch die Entladevorrichtung wieder entnommen.

Fig. 4 verdeutlicht einen weiteren Vorteil des Drehautomaten, der darin besteht, daß die Werkzeugstationen 2 bis 7 und 1 bis 7 beginnend mit der Station 2 während eines Arbeitszyklusses mindestens während eines Arbeitstaktes und maximal über sechs Arbeitstakte nicht belegt sind, so daß die Werkzeuge abkühlen können und dadurch ihre Standzeiten erhöht werden.

Fig. 5 zeigt eine weitere Ausführungsform eines Drehautomaten 20 mit einer schrägen Anordnung der Werkzeugstationen 2 bis 5 und 1 bis 5 sowie der die Werkzeuge 12, 15 aufnehmenden Schlitten 13, 16 und des Schlittens 19 für die Werkstückspindeln 10.

Ferner ist auch eine vertikale Anordnung der Werkzeugstationen möglich.

Das vorbeschriebene Konstruktionsprinzip eröffnet die Möglichkeit, zwei und mehr gleiche oder verschiedene Werkstücke bei einer entsprechenden Erhöhung der Anzahl der Be- und Entladevorrichtungen gleichzeitig auf einem Mehrspindeldrehautomaten zu fertigen.

Schließlich können durch die stufenlose Drehzahlregelung jedes Antriebsmotors für die einzelnen Werkstückspindeln in den einen Bearbeitungsstationen Spindeln mit gleichen oder unterschiedlichen Drehzahlen angetrieben und gleichzeitig in anderen Stationen Spindeln abgeschaltet werden, so daß beispielsweise in einer Station an einem rotierenden Werkstück ein zylindrischer Abschnitt gedreht wird und in den beiden folgenden Stationen das stillstehende Werkstück eine Gewindebohrung erhält. Dieses Beispiel verdeutlicht, daß die Fertigungsmöglichkeiten des Drehautomaten durch die stufenlose Drehzahlregelung der Antriebsmotoren der Spindeln gegenüber bekannten Drehautomaten erheblich erweitert werden.

Das vorstehend erläuterte, bei einem Futterdrehautomaten angewandte Grundprinzip ist auch bei Stangendrehautomaten einsetzbar.

## Ansprüche

1. Mehrspindeldrehautomat zur Fertigung von Werkstücken in aufeinanderfolgenden Bearbeitungsstationen mit Werkstückspindeln (10) und Werkzeugstationen, die taktweise gegeneinander verschiebbar sind, wobei die Anzahl (n) der Werkstückspindeln (10) gleich der Anzahl (n) der Werkzeugstationen ist, dadurch gekennzeichnet, daß zusätzlich zur Anzahl der Grundwerkzeugstationen (1 bis n) jede Grundwerkzeugstation bis auf die erste nochmals als zusätzliche Werkzeugstationen (2 bis n) vorgesehen sind, die in gleicher Reihenfolge der Bearbeitung vor den Grundwerkzeugstationen (1 bis n) angeordnet sind, so daß die Gesamtzahl der Bearbeitungsstationen N = 2n - 1 beträgt, wobei die Bearbeitung so erfolgt, daß jedes Werkstück nach jeder Bearbeitung in einer Werkzeugstation taktweise linear, relativ zur nächsten Station verschoben wird und nach n - 1 Transportschritten und einem anschließenden Rückhub oder einem Rückhub zwischen zwei Transportschritten in seine Ausgangsbearbeitungsstation gelangt, und daß eine Be- und Entladevorrichtung für die Werkstücke an mindestens einer Werkzeugstation vorgesehen ist.

2. Drehautomat nach Anspruch 1, dadurch gekennzeichnet, daß die Be- und Entladevorrichtung für die Werkstücke an der Werkzeugstation (1) angeordnet ist.

3. Drehautomat nach Anspruch 1 und 2, dadurch gekennzeichnet, daß die Spindeln (10) oder die Bearbeitungsstationen (N) auf Schlitten (19, 13, 16) mit einem hydraulischen oder elektrischen Antrieb angeordnet sind.

4. Drehautomat nach einem der Ansprüche 1 bis 3, gekennzeichnet durch einen gesonderten Antrieb mit stufenloser Drehzahlregelung, vorzugsweise einen elektromotorischen Antrieb für jede Spindel (10).

5. Drehautomat nach einem der Ansprüche 1 bis 4, gekennzeichnet durch einen Einbau der Spindeln (10) in einem gemeinsamen Spindelstock (18).

6. Drehautomat nach einem der Ansprüche 1 bis 5, gekennzeichnet durch eine Anordnung der Werkzeuge (12, 15) der einzelnen Werkzeugstationen (1 bis n; 2 bis n) über den ganzen Umfangsbereich sowie an der Frontseite der Werkstücke.

7. Drehautomat nach einem der Ansprüche 1 bis 6, gekennzeichnet durch eine Ausbildung als Futterdrehautomat (11).

8. Drehautomat nach einem der Ansprüche 1 bis 6, gekennzeichnet durch eine Ausbildung als Stangendrehautomat.

EP 0 312 944 A2

## Fig.1

## Fig.2

Fig. 5

Fig. 3

Fig. 4